# EUROPÄISCHE PATENTSCHRIFT

(11) **EP 1 006 032 B1**
(45) Veröffentlichungstag und Bekanntmachung des Hinweises auf die Patenterteilung: **30.05.2007**
(21) Anmeldenummer: 99118947.3
(22) Anmeldetag: 25.09.1999
(51) Int. Cl.: B60T 8/00, B60T 13/74

(54) **Radmodul für ein Fahrzeug**
Vehicle wheel unit
Module de roue pour une voiture

(30) Priorität: 27.11.1998 DE 19854788
(43) Veröffentlichungstag der Anmeldung: 07.06.2000
(73) Patentinhaber: WABCO GmbH, 30453 Hannover (DE)
(72) Erfinder: Riedemann, Henrich, (DE); Wolf, Thomas, 30451 Hannover (DE)
(74) Vertreter: Schrödter, Manfred

(56) Entgegenhaltungen:
- DE-A- 19 634 567
- DE-C- 19 521 175
- US-A- 5 288 139

## Beschreibung

Die Erfindung betrifft ein Radmodul für ein Fahrzeug mit einem elektrisch steuerbaren Bremssystem (EBS) zur Steuerung der Bremskraft an wenigstens einem Rad des Fahrzeuges gemäß dem Oberbegriff des Patentanspruchs 1.

Ein derartiges Radmodul ist aus der EP 0 467 112 B1 bekannt.

Das bekannte Radmodul ist Teil eines elektrisch steuerbaren Bremssystems, welches Radmoduln, Zentralmoduln sowie Gebereinrichtungen, wie z. B. einen Bremswertgeber, aufweist. Das bekannte Radmodul ist einem Rad eines Fahrzeuges zugeordnet. Mittels eines demselben Rad zugeordneten Drehgeschwindigkeitssensors wird ein die Drehgeschwindigkeit des Rades repräsentierendes Signal erzeugt und dem diesem Rad zugeordneten Radmodul zur Auswertung zugeführt. Eine in dem Radmodul angeordnete elektronische Steuereinrichtung mit einem Mikroprozessor wertet dieses Signal aus und sendet ein daraus berechnetes Geschwindigkeitssignal über ein Datenbussystem aus. Über das Datenbussystem sind mehrere Radmoduln, die jeweils ein Geschwindigkeitssignal aussenden, mit einem Zentralmodul verbunden. Das Zentralmodul wertet die vom Datenbussystem empfangenen Geschwindigkeitssignale aus und berechnet hieraus z. B. eine Fahrzeugreferenzgeschwindigkeit, die für eine Antiblockier-Regelung erforderlich ist. Diese Fahrzeugreferenzgeschwindigkeit und gegebenenfalls weitere, für eine Antiblockier-Regelung erforderliche Rechenergebnisse sendet das Zentralmodul sodann an die Radmoduln zurück, welche diese Daten dann für eine Antiblockier-Regelung an dem ihnen zugeordneten Rad verwenden.

Demzufolge müssen über das Datenbussystem relativ viele Daten zwischen den daran angeschlossenen Moduln ausgetauscht werden.

Der Erfindung liegt daher die Aufgabe zugrunde, ein Radmodul sowie ein Bremssystem anzugeben, bei dem der Aufwand für die Datenübertragung verringert ist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß der Aufwand für die Datenübertragung zwischen den Moduln des Bremssystems auf ein äußerst geringes Maß reduziert wird, indem die für eine Bremsensteuerung mit Antiblockier-Regelung notwendigen, aus den Eingangssignalen berechneten Rechenergebnisse, wie z. B. eine Fahrzeugreferenzgeschwindigkeit, Schlupfsignale, Beschleunigungssignale, Bremskraftverringerungs-, Halte- und/oder Wiederaufbausignale, nicht an zentraler Stelle, d. h. in einem Zentralmodul, berechnet und über das Datenbussystem an die Radmoduln übertragen wird, sondern direkt in einem Radmodul lokal berechnet wird. Da insbesondere eine Antiblockier-Regelung sehr zeitkritisch ist, ist außerdem eine Verbesserung der Regelgüte erzielbar, weil Zeitverzögerungen, die infolge einer Datenübertragung zwischen dem Zentralmodul und dem Radmodul entstehen, vermieden werden. Ein weiterer Vorteil des erfindungsgemäßen Radmoduls besteht darin, daß es auch ohne Zentralmodul bzw. auch nach Ausfall des Zentralmoduls ohne Einschränkungen hinsichtlich der Antiblockier-Regelverfahren betrieben werden. So kann sogar ohne Zentralmodul z. B. eine sogenannte Modifizierte Individualregelung, wie z.B. aus der DE 28 51 107 C2 bekannt, an einer lenkbaren Achse zur Abschwächung von Giermomentänderungen ausgeführt werden. Auch weitere, dem Fachmann im einzelnen geläufige Regelungsprinzipien wie z.B. Variable Achsregelung oder Modifizierte Achsregelung können sowohl mit als auch ohne Zentralmodul ausgeführt werden.

Ein weiterer Vorteil der Erfindung besteht darin, daß in jedem Radmodul das gleiche Steuerprogramm vorgesehen sein kann, so daß unabhängig von der Zahl der eingesetzten Radmoduln in einem Fahrzeug nur ein einziges Steuerprogramm zu erstellen ist, wodurch der Entwicklungsaufwand relativ gering ist.

Gemäß einer vorteilhaften Weiterbildung der Erfindung wird eine Festlegung der Radzuordnung eines Radmoduls durch Eingabe eines Radpositionsparameters, der in eine in dem Radmodul vorgesehene elektronische Steuereinrichtung eingegeben wird, vorgenommen. Dies hat den Vorteil, daß zunächst identische Radmoduln hergestellt werden können, welche erst zu einem relativ späten Zeitpunkt, z. B. bei ihrer Installation in einem Fahrzeug, ihre Funktion im Detail zugewiesen bekommen. Eine Radzuordnung ist beispielsweise notwendig, um an einer lenkbaren Achse eines Fahrzeuges die Antiblockier-Regelung nach einem anderen Prinzip, z. B. als bereits erwähnte Modifizierte Individualregelung, durchzuführen als an einer nicht lenkbaren Achse des Fahrzeuges, an der beispielsweise eine sogenannte Individualregelung durchgeführt wird.

Die Eingabe des Radpositionsparameters kann z. B. manuell durch Bedienung eines Diagnosegerätes, welches den Radmoduln entsprechende Daten übermittelt, vorgenommen werden. Falls in dem Bremssystem ein Zentralmodul vorgesehen ist, dann nimmt gemäß einer vorteilhaften Weiterbildung der Erfindung das Zentralmodul die Zuweisung der Radzuordnung automatisch vor, z. B. einmalig bei Erstinstallation der Bremsanlage. Hierfür sind dann in dem Zentralmodul Informationen über die Radzuordnung und die Bremsanlage gespeichert.

Zur Durchführung bestimmter Regelungsfunktionen, bei denen Geschwindigkeitsinformationen mehrerer Räder vorliegen müssen, z. B. Modifizierte Individualregelung, ist es notwendig, daß bestimmte Radmoduln das aus dem Signal des ihnen zugeordneten Drehgeschwindigkeitssensors berechnete Geschwindigkeitssignal über das Datenbussystem übertragen. Gemäß einer vorteilhaften Weiterbildung der Erfindung übertragen jedoch nicht alle Radmoduln ihr jeweiliges Geschwindigkeitssignal, sondern nur diejenigen Radmoduln, deren Geschwindigkeitssignale in anderen Radmoduln benötigt werden. Hierdurch wird der Aufwand für die Datenübertragung gering gehalten. In vorteilhafter Weise kann die elektronische Steuereinrichtung eines Radmoduls anhand des Radpositionsparameters erkennen, ob das Geschwindigkeitssignal über das Datenbussystem übertragen werden soll oder nicht.

Gemäß einer vorteilhaften Weiterbildung der Erfindung übertragen Radmoduln, die infolge der Festlegung der Radzuordnung an einer dritten oder weiteren Fahrzeugachse, d. h. nicht an der lenkbaren oder der angetriebenen Achse, angeordnet sind, kein Geschwindigkeitssignal über das Datenbussystem. Hierdurch ist das Bremssystem modular um eine im Prinzip unbegrenzte Anzahl von Radmoduln je nach Anforderungen durch das Fahrzeug erweiterbar, ohne daß der Aufwand für die Datenübertragung nennenswert steigt oder besondere Anpassungsarbeiten erforderlich wären.

Eine vorteilhafte Ausgestaltung der Erfindung besteht darin, ein Bremssystem mit mehreren Radmoduln der zuvor beschriebenen Art sowie mit einem Zentralmodul auszustatten, wobei diese Moduln über ein oder mehrere Datenbussysteme zum Austausch von Informationen miteinander verbunden sind. Das Zentralmodul dient hierbei vorzugsweise zur Ausführung zentraler, nur einmal in dem Fahrzeug benötigter Bremsensteuerungsfunktionen. So werden dem Zentralmodul vorzugsweise sogenannte Bremsenmanagement-Funktionen zugewiesen. Hierunter versteht man beispielsweise eine achslastabhängige Bremskraftverteilungsfunktion, eine einen gleichmäßigen Verschleiß der Bremsbeläge fördernde Bremskraftverteilungsfunktion oder auch eine Regelung der Fahrzeugverzögerung. Das Zentralmodul kann auch weitere zentrale Funktionen, wie z. B. eine Motorregelung als Teil einer Antriebsschlupfregelung, ausführen.

Die Erfindung wird im folgenden anhand eines Ausführungsbeispiels unter Zuhilfenahme von Zeichnungen näher erläutert.

Es zeigen
- Fig. 1: das erfindungsgemäße Radmodul in schematischer Darstellung und
- Fig. 2: einen schematischen Ablaufplan der in einem Radmodul zur Antiblockier-Regelung auszuführenden Programmschritte und
- Fig. 3: ein elektrisch gesteuertes Bremssystem mit mehreren Radmoduln und einem Zentralmodul.

In den Figuren werden gleiche Bezugszeichen für einander entsprechende Teile und Funktionen verwendet.

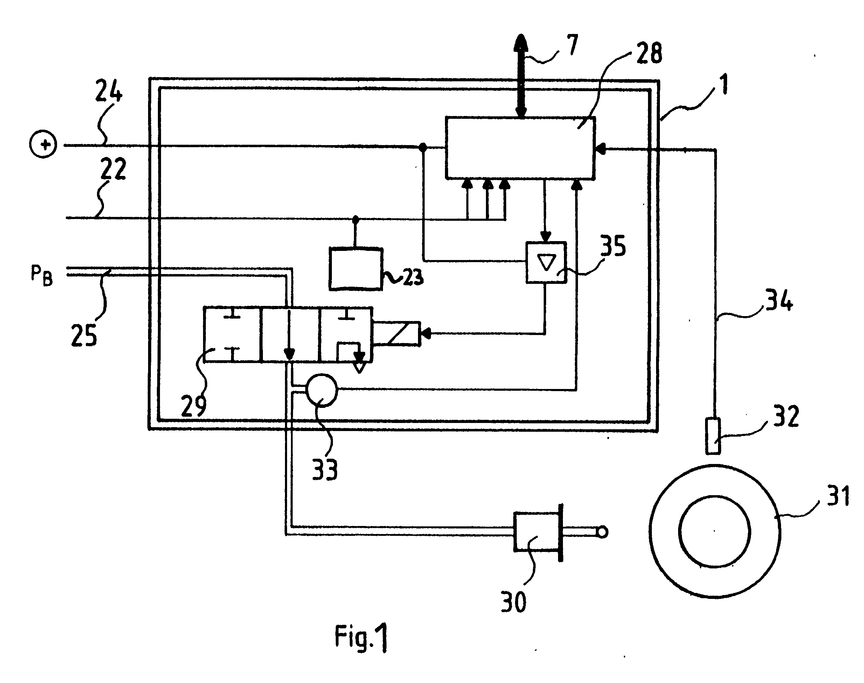

In der Fig. 1 ist der innere Aufbau eines Radmoduls (1) schematisch dargestellt. Von einer in dem Radmodul (1) angeordneten elektronischen Steuereinrichtung ist zur besseren Übersicht nur ein Mikrocomputer (28), ein nichtflüchtiger Speicherbaustein (23) und ein Ausgangsverstärker (35) dargestellt. Weitere, in der Praxis üblicherweise eingesetzte und dem Fachmann bekannte zusätzliche Schaltungsteile, wie Pegelanpassungen, Analog-/Digitalwandler, Treiber usw. sind nicht näher dargestellt.

Der Mikrocomputer (28), der vorzugsweise vom Typ 68010 der Firma Motorola bzw. ein anderer 16 Bit Mikrocomputer ist, wird über eine elektrische Leitung (24) mit Betriebsspannung versorgt. Der Mikrocomputer (28) ist über ein Datenbussystem (7) mit weiteren Radmoduln und gegebenenfalls auch einem Zentralmodul verbunden. Als Datenbussystem (7) kann vorzugsweise ein CAN-Datenbus eingesetzt werden.

Der Mikrocomputer (28) gibt bei Bedarf über einen Ausgangsverstärker (35) ein Stellsignal an eine Ventileinrichtung (29) ab. Die Ventileinrichtung (29) ist als 3/3-Wegeventil ausgebildet. Mittels der Ventileinrichtung (29) kann in Abhängigkeit von dem Stellsignal ein ihr über eine Drückmittelleitung (25) zugeführter Vorratsdruck (P_{B}) ausgangsseitig an einen mit dem Radmodul verbundenen Bremszylinder (30), welcher zur mechanischen Betätigung einer mit einem Rad (31) verbundenen Radbremse dient, weitergeleitet werden. Die Ventileinrichtung (29) und der Bremszylinder (30) bilden somit einen Aktuator zur Einstellung der Bremskraft an dem Rad (31).

Bei entsprechenden anderen Stellsignalen kann mittels der Ventileinrichtung (29) der Bremsdruck in dem Bremszylinder (30) reduziert oder auf einem vorhandenen Wert gehalten werden. In den beiden letztgenannten Fällen ist der Bremszylinder (30) nicht mit dem Vorratsdruck (P_{B}) verbunden. Der jeweils in dem Bremszylinder (30) vorliegende Bremsdruck, welcher die Ist-Bremskraft repräsentiert, wird mittels eines Drucksensors (33) in ein elektrisches Signal umgewandelt, welches dem Mikrocomputer (28) zugeführt wird.

Des weiteren wird dem Mikrocomputer (28) ein mittels eines Drehgeschwindigkeitssensors (32) erzeugtes Signal über eine elektrische Leitung (34) zur Auswertung zugeführt. Der Drehgeschwindigkeitssensor (32) ist vorzugsweise als elektromagnetisch wirkender Impulsdrehzahlgeber ausgebildet und wirkt mit einem in der Fig. 1 nicht dargestellten, mit einer Vielzahl von Zähnen versehenen Polrad zusammen. Das infolge von Drehungen des Polrades erzeugte Signal ist eine Folge von Spannungsimpulsen, deren zeitlicher Abstand voneinander ein Maß für die Drehgeschwindigkeit des Rades (31) ist. Der Mikrocomputer (28) berechnet aus den zeitlichen Abständen unter Verwendung zusätzlicher Informationen, die in dem Radmodul gespeichert sind, wie z.B. dem Umfang des Rades (31), ein Geschwindigkeitssignal.

Über eine elektrische Leitung (22) werden dem Mikrocomputer (28) Signale weiterer Sensoren, z. B. von einem Bremsbelag-Verschleißsensor, zugeführt. Über die Leitung (22) kann der Mikrocomputer (28) außerdem Daten von einem nichtflüchtigen Speicherbaustein (23), z. B. einem EEPROM, lesen bzw. Daten dorthin schreiben. In dem Speicherbaustein (23) sind Informationen wie z.B. der Radpositionsparameter und der Umfang des Rades (31) speicherbar.

Der Mikrocomputer (28) empfängt von dem Datenbussystem (7) einen Bremswert, der die an dem Rad (31) einzustellende Soll-Bremskraft angibt. Der Bremswert wird entweder direkt von einem mit dem Bremspedal verbundenem Bremswertgeber oder von einem mit dem Bremswertgeber verbundenen Zentralmodul ausgesandt. Das Radmodul hat die Aufgabe, diesen Bremswert in eine entsprechende Bremskraft bzw. einen Bremsdruck in den Bremszylinder (30) umzuwandeln, so daß das Fahrzeug nach Maßgabe der Bremspedalbetätigung gebremst wird.

Falls hierbei durch Auswertung des von dem Drehgeschwindigkeitssensor (32) gelieferten Signals ein beginnendes Blockieren des Rades (31) erkannt wird, wird der Bremsdruck abweichend von dem infolge des Bremswertes normalerweise einzustellenden Bremsdruck im Rahmen eines Antiblockier-Regelungsverfahrens in bekannter Weise verringert bzw. durch kontinuierliche Anpassungen derart moduliert, daß der Schlupf des Rades (31) auf einen konstanten Wert von etwa 20% eingeregelt wird. Im Rahmen dieses Antiblockier-Regelungsverfahrens werden in dem Mikrocomputer (28) neben dem von dem Drehgeschwindigkeitssensor (32) erzeugten Geschwindigkeitssignal noch weitere Geschwindigkeitssignale von anderen Radmoduln berücksichtigt.

Das Radmodul (1) kann auch in den Bremszylinder (30) baulich integriert sein, was einen sehr kompakten Aufbau und eine vereinfachte Montage ergibt.

In einer anderen vorteilhaften Ausführungsform können statt eines Bremszylinders auch mehrere Bremszylinder, die den Rädern einer Rad- oder Achsgruppe des Fahrzeuges zugeordnet sind und mit dem gleichen Bremsdruck beaufschlagt werden sollen, mit dem Radmodul verbunden werden. In diesem Fall wäre in dem Radmodul eine Anschlußmöglichkeit für einen oder mehrere weitere Drehgeschwindigkeitssensoren vorgesehen, die zur Ermittlung der Drehgeschwindigkeiten der übrigen Räder der Rad- oder Achsgruppe dienen.

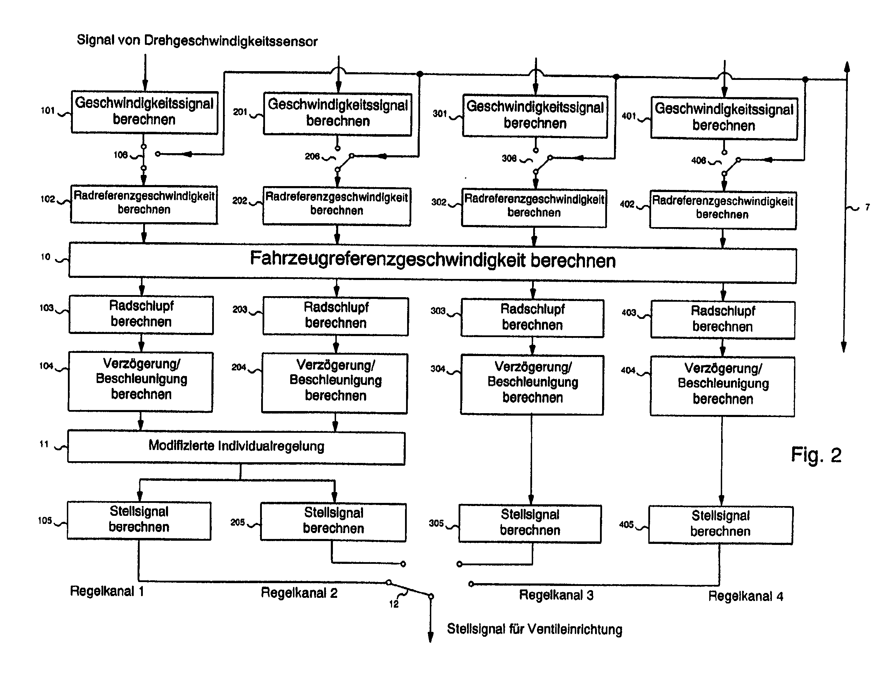

In der Fig. 2 ist beispielhaft eine Abfolge von einzelnen Programmschritten eines Antiblockier-Regelungsverfahrens, wie es in dem Mikrocomputer (28) ausgeführt wird, dargestellt. Das Antiblockier-Regelungsverfahren besteht vom Prinzip her einerseits aus gleichartigen, den jeweiligen Rädern zuzuordnenden Programmschritten (101, 102, 103, 104, 105, 201, 202, 203, 204, 205, 301, 302, 303, 304, 305, 401, 402, 403, 404, 405) und andererseits aus gemeinsamen, für mehrere oder alle Räder gültigen Programmschritten (10, 11). Die gleichartigen, den Rädern zuzuordnenden Programmschritte werden auch als Regelkanäle bezeichnet.

In dem Beispiel gemäß Fig. 2 sind vier Regelkanäle dargestellt. Der Regelkanal 1 besteht aus den Programmschritten (101, 102, 103, 104, 105), der Regelkanal 2 besteht aus den Programmschritten (201, 202, 203, 204, 205), der Regelkanal 3 besteht aus den Programmschritten (301, 302, 303, 304, 305) und der Regelkanal 4 besteht aus den Programmschritten (401, 402, 403, 404, 405). Je nach Anwendungsfall kann auch eine andere Anzahl von Regelkanälen vorgesehen sein, z.B. zwei oder drei Regelkanäle.

Jeder der Regelkanäle ist grundsätzlich für die Verarbeitung eines Eingangssignals von einem Drehgeschwindigkeitssensor und zur Ausgabe eines Stellsignals für eine Ventileinrichtung vorgesehen. Das dargestellte Antiblockier-Regelungsverfahren könnte somit in einem entsprechenden Steuergerät auch zur Antiblockier-Regelung von vier Rädern eines Fahrzeuges im Sinne eines Vierkanal-Antiblockiersystems verwendet werden.

Im Unterschied zu einem Vierkanal-Antiblockiersystem weist jedoch die in dem Radmodul (1) vorgesehene elektronische Steuereinrichtung nur für einen Drehgeschwindigkeitssensor (32) und eine Ventileinrichtung (29) Anschlußmöglichkeiten auf. Aus diesem Grunde wird das Signal von dem Drehgeschwindigkeitssensor (32) nur einem der Regelkanäle, der im folgenden als Hauptregelkanal bezeichnet wird, zur Auswertung zugeführt. Die übrigen Regelkanäle, im folgenden als Zusatzregelkanäle bezeichnet, erhalten ihre Geschwindigkeitsinformation von dem Datenbussystem (7). Für die Auswahl der Datenquelle für die Geschwindigkeitsinformation ist in jedem Regelkanal ein logischer Umschalter (106, 206, 306, 406) vorgesehen, welcher mittels Programmierung des Radmoduls im Rahmen der Radzuordnung eingestellt werden kann.

Ebenso ist für die Weitergabe der von den vier Regelkanälen jeweils berechneten Stellsignale ein logischer Auswahlschalter (12) vorgesehen, welcher auf die gleiche Weise programmierbar ist und vorzugsweise derart programmiert wird, daß das Stellsignal von dem Hauptregelkanal an die Ventileinrichtung (29) ausgegeben wird.

Im Beispiel gemäß Fig. 2 wurde der Regelkanal 1 per Radzuordnung des Radmoduls als Hauptregelkanal definiert. Der Regelkanal 1 ist, ebenso wie der Regelkanal 2, für eine Antiblockier-Regelung eines an einer lenkbaren Vorderachse eines Fahrzeuges angeordneten Rades vorgesehen.

Zwischen der Eingabe der Geschwindigkeitssignale in die Regelkanäle und der Ausgabe des Stellsignals werden verschiedene, dem Fachmann im einzelnen bekannte Programmschritte einer Antiblockier-Regelung ausgeführt. Beispielhaft seien hier die Programmschritte
- Geschwindigkeitssignal berechnen (101, 201, 301, 401),
- Radreferenzgeschwindigkeit berechnen (102, 202, 302, 402),
- Fahrzeugreferenzgeschwindigkeit berechnen (10),
- Radschlupf berechnen (103, 203, 303, 403),
- Verzögerung/Beschleunigung berechnen (104, 204, 304, 404),
- Modifizierte Individualregelung (11) und
- Stellsignal berechnen (105, 205, 305, 405)
aufgeführt.

Die Programmschritte (101, 201, 301, 401) sind für eine Umsetzung des von dem Drehgeschwindigkeitssensor (32) abgegebenen Signals, z.B. der Folge von Impulsen mit veränderlichem zeitlichen Abstand, in das von den nachfolgenden Programmschritten verarbeitbare Geschwindigkeitssignal vorgesehen. Im vorliegenden Ausführungsbeispiel wird das Signal von dem Drehgeschwindigkeitssensor (32) in dem Programmschritt (101) verarbeitet. Die Regelkanäle 2, 3 und 4 erhalten, wie erwähnt, ihre Geschwindigkeitsinformation von dem Datenbussystem (7). Das in dem Programmschritt (101) berechnete Geschwindigkeitssignal wird neben der Verwendung in dem Regelkanal 1 außerdem auf dem Datenbussystem (7) ausgesendet (nicht dargestellt).

Wie aus der Fig. 2 hervorgeht, wird für jeden Regelkanal eine eigene, radbezogene Referenzgeschwindigkeit, die sogenannte Radreferenzgeschwindigkeit, berechnet (Programmschritte 102, 202, 302, 402). In einem darauffolgenden, gemeinsamen Programmschritt (10) wird aus allen zuvor berechneten Radreferenzgeschwindigkeiten als erstes Zwischenergebnis der Berechnungen eine gemeinsame Fahrzeugreferenzgeschwindigkeit berechnet.

Sodann wird unter Zuhilfenahme der gemeinsamen Fahrzeugreferenzgeschwindigkeit in jedem Regelkanal ein Radschlupf für jedes Rad berechnet (Programmschritte 103, 203, 303, 403). Des weiteren wird ebenfalls für jedes Rad in jedem Regelkanal die momentane Verzögerung bzw. Beschleunigung berechnet (Programmschritte 104, 204, 304, 404).

In einem weiteren Programmschritt (11) wird für die Regelkanäle 1 und 2 ein weiteres Zwischenergebnis berechnet, welches bei der abschließenden Berechnung des Stellsignals für die Ventileinrichtung eine Abschwächung des Giermoments an der Vorderachse im Sinne der bereits erwähnten Modifizierten Individualregelung bewirkt.

Unter Anwendung dieses weiteren Zwischenergebnisses wird daraufhin in den einzelnen Regelkanälen 1 und 2 ein jeweiliges Stellsignal berechnet.

Bei den den Hinterrädern eines Fahrzeuges zuzuordnenden Regelkanälen 3 und 4 wird im vorliegenden Ausführungsbeispiel eine sogenannte Individualregelung vorgenommen, d. h. es wird kein Zwischenergebnis für eine Modifizierte Individualregelung berechnet. Daher wird ohne Berechnung weiterer Zwischenergebnisse in den Regelkanälen 3 und 4 jeweils ein Stellsignal berechnet.

Falls an den Hinterrädern z.B. eine Variable Achsregelung zum Einsatz käme, wäre zwischen den Programmschritten (304, 404) und (305, 405) ein für die Regelkanäle 3 und 4 gemeinsamer Programmschritt analog zu dem Programmschritt (11) vorgesehen, in dem dann Rechenschritte für die zuvor genannte Variable Achsregelung auszuführen wären.

Bei der zuvor beschriebenen Programmstruktur wird der Hauptregelkanal, der schließlich das Stellsignal für die Ventileinrichtung (29) erzeugt, infolge der direkten Anbindung an das Signal von dem dem Radmodul zugeordneten Drehgeschwindigkeitssensor (32) mit einer besonders häufig aktualisierten und somit sehr aktuellen Geschwindigkeitsinformation versorgt. Die Zusatzregelkanäle erhalten ihre Geschwindigkeitsinformation von dem Datenbussystem (7) in der Regel mit einer geringeren Aktualisierungshäufigkeit. Hierdurch ist eine hohe Regelgüte bei dynamischen Vorgängen an dem Rad, insbesondere bei der Antiblockier-Regelung, erzielbar.

Bei dem anhand der Fig. 2 beschriebenen Ausführungsbeispiel enthält der Radpositionsparameter Informationen über die Einstellung der logischen Schalter (106, 206, 306, 406, 12). Als Radpositionsparameter kann beispielsweise auch die Nummer des Hauptregelkanals verwendet werden, d.h. im vorliegenden Fall wäre der Radpositionsparameter dann auf den Wert 1 zu setzen. Die Einstellung der logischen Schalter (106, 206, 306, 406, 12) wäre dann von dem Mikrocomputer (28) von diesem Wert abzuleiten.

Statt der zuvor beschriebenen Programmstruktur mit vier Regelkanälen wäre auch die Verwendung einer anderen Anzahl von Regelkanälen denkbar.

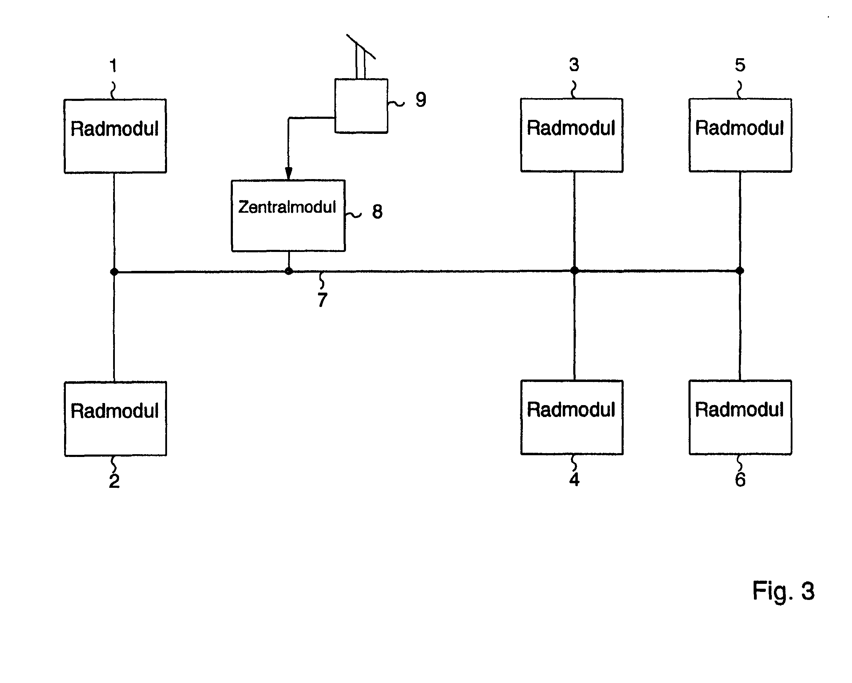

In der Fig. 3 ist eine Anordnung von Radmoduln (1, 2, 3, 4, 5, 6) und einem Zentralmodul (8) dargestellt, die zur Steuerung der Bremsanlage eines dreiachsigen Fahrzeuges, z. B. mit einer Vorderachse und zwei Hinterachsen, dient. Die Radmoduln (1, 2, 3, 4, 5, 6) sind untereinander und mit dem Zentralmodul (8) über das Datenbussystem (7) verbunden. Die Radmoduln sind alle vom gleichen Typ, d. h. sie weisen den gemäß den Fig. 1 beschriebenen Aufbau und die gemäß Fig. 2 beschriebene Programmstruktur auf. Das Zentralmodul (8) ist mit einem Bremswertgeber (9) verbunden, der ein die Bremsbetätigung durch den Fahrer repräsentierendes Signal abgibt. Dieses Signal wird in dem Zentralmodul (8) verarbeitet. Das Verarbeitungsergebnis wird über das Datenbussystem (7) den Radmoduln (1, 2, 3, 4, 5, 6) als Bremswert zugesandt. Bei dieser Verarbeitung führt das Zentralmodul unter anderem zentrale, fahrzeugweite Bremsensteuerungsfunktionen, wie z. B. achslastabhängige Bremskraftverteilung, durch. Hierfür stehen dem Zentralmodul (8) Signale weiterer Sensoren bzw. Informationen von den Radmoduln zur Verfügung (nicht dargestellt).

Das Zentralmodul (8) überträgt vorzugsweise bei erstmaliger Inbetriebnahme der Bremsanlage bzw. des Fahrzeuges eine Information über die Radzuordnung eines Radmoduls an jedes der Radmoduln. Diese Information wird in einem Radmodul dann in dem nichtflüchtigen Speicher (23) gespeichert und steht fortan ständig zur Verfügung.

Das Zentralmodul (8) und der Bremswertgeber (9) können auch in einer Baueinheit zusammengefaßt sein.

Wie bereits erwähnt, ist es auch möglich, eine elektrische Steuerung der Bremsanlage ohne Verwendung des Zentralmoduls (8) nur Verwendung von Radmoduln (1, 2, 3, 4, 5, 6) durchzuführen. In diesem Fall wäre der Bremswertgeber (9) über eine geeignete Schnittstelleneinrichtung direkt mit dem Datenbussystem (7) verbunden. Der von dem Bremswertgeber ausgesandte Bremswert stellt dann den Bremswunsch des Fahrers dar. Die Festlegung der Radzuordnung der Radmoduln wird in diesem Fall durch Verwendung eines Diagnosegerätes, das vorzugsweise ebenfalls bei erstmaliger Inbetriebnahme der Bremsanlage mit dem Datenbussystem (7) verbunden wird, vorgenommen. Das Diagnosegerät wird nach Beendigung der Zuordnungsprozedur wieder entfernt.

In der in der Fig. 3 dargestellten Anordnung sind die Radmoduln (1, 2) einer lenkbaren Vorderachse eines Fahrzeuges zugeordnet. Die Radmoduln (3, 4) sind einer Hinterachse, z. B. der Antriebsachse, des Fahrzeuges zugeordnet. Die Radpositionsparameter in den Radmoduln (1, 2, 3, 4) sind derart eingestellt, daß das Stellsignal desjenigen Regelkanals der Ventileinrichtung (29) zugeführt wird, dessen Regelkanalnummer der Numerierung des entsprechenden Radmoduls gemäß Fig. 3 entspricht. Mit anderen Worten, in dem Radmodul (1) ist der Regelkanal 1 als Hauptregelkanal definiert, in dem Radmodul (2) ist der Regelkanal 2 Hauptregelkanal und so fort.

Die Radmoduln (5, 6) sind einer weiteren Hinterachse des Fahrzeuges zugeordnet. Die Radzuordnung dieser Radmoduln (5, 6) ist entsprechend den Radmoduln (3, 4), die ebenfalls einer Hinterachse zugeordnet sind, vorgenommen worden. In dem Radmodul (5) ist demzufolge der Regelkanal (3) als Hauptregelkanal festgelegt worden, während in dem Radmodul (6) der Regelkanal (4) festgelegt worden ist. Bei Verwendung zusätzlicher Radmoduln würden diese je nach Art der Fahrzeugachse, welcher sie zugeordnet sind, eine entsprechende Radzuordnung erhalten.

## Patentansprüche

1. Radmodul (1) für ein Fahrzeug mit einem elektrisch steuerbaren Bremssystem (EBS) zur Steuerung der Bremskraft an wenigstens einem Rad (31) des Fahrzeuges,
a) dem ein die gewünschte Soll-Bremskraft für das Rad (31) angebender Bremswert zugeführt wird,
b) dem ein radspezifisches Signal des Rades (31) und wenigstens ein weiteres radspezifisches Signal eines weiteren Rades zugeführt wird,
c) der ein unter Verwendung des Bremswertes und der radspezifischen Signale berechnetes Stellsignal an einen Aktuator (29, 30) abgibt, welcher zur Einstellung der Bremskraft an dem Rad (31) vorgesehen ist,
**gekennzeichnet durch** einen dem Rad (31) zugeordneten Hauptregelkanal und wenigstens einen Zusatzregelkanal, in denen jeweils radspezifische Rechenschritte ausgeführt werden, wobei in dem Hauptregelkanal unter Verwendung von Rechenergebnissen des Zusatzregelkanals das Stellsignal berechnet wird.

2. Radmodul nach Anspruch 1, **dadurch gekennzeichnet, daß** das radspezifische Signal des Rades (31) dem Radmodul mit einer höheren Wiederholrate zugeführt wird als das weitere radspezifische Signal des weiteren Rades.

3. Radmodul nach einem der vorhergehenden Ansprüche, **dadurch gekennzeichnet, daß** als radspezifisches Signal ein die Drehgeschwindigkeit des Rades angebendes Signal verwendet wird.

4. Radmodul nach einem der vorhergehenden Ansprüche, **gekennzeichnet durch** folgende Merkmale:
a) die radspezifischen Rechenschritte weisen Rechenschritte zur Antiblockier-Regelung eines Rades auf, in denen Zwischenergebnisse gebildet werden,
b) das Stellsignal wird unter Verwendung der Zwischenergebnisse berechnet.

5. Radmodul nach Anspruch 4, **dadurch gekennzeichnet, daß** als Zwischenergebnisse Schlupfsignale, Beschleunigungssignale, und/oder Bremskraftverringerungs-, Halte- und/oder Wiederaufbausignale bestimmt werden.

6. Radmodul nach einem der vorhergehenden Ansprüche, **dadurch gekennzeichnet, daß** eine Festlegung der Radzuordnung durch Eingabe eines Radpositionsparameters in eine in dem Radmodul (1) vorgesehene elektronische Steuereinrichtung (23, 28, 35) vorgenommen wird.

7. Radmodul nach einem der vorhergehenden Ansprüche, **gekennzeichnet durch** einen mit dem Radmodul (1) verbundenen Drehgeschwindigkeitssensor (32) zur Ermittlung der Drehgeschwindigkeit des Rades (31).

8. Radmodul nach Anspruch 7, **dadurch gekennzeichnet, daß** bei Zuordnung des Radmoduls (1) zu einer lenkbaren und/oder angetriebenen Achse eines Fahrzeuges das von dem Drehgeschwindigkeitssensor (32) empfangene Signal oder ein daraus abgeleitetes Signal über einen Datenkanal (7), insbesondere ein Datenbussystem, ausgesandt wird.

9. Radmodul nach einem der Ansprüche 7 oder 8, **dadurch gekennzeichnet, daß** bei Zuordnung des Radmoduls (1) zu einer dritten oder weiteren Fahrzeugachse das von dem Drehgeschwindigkeitssensor (32) empfangene Signal oder das daraus abgeleitete Signal nicht über den Datenkanal (7) ausgesandt wird.

10. Radmodul nach einem der vorhergehenden Ansprüche, **dadurch gekennzeichnet, daß** ein die Ist-Bremskraft an dem Rad (31) repräsentierendes Signal von einem weiteren Sensor (33), insbesondere einem Drucksensor, ausgewertet wird.

11. Bremssystem mit mehreren Radmoduln (1, 2, 3, 4, 5, 6) nach einem der vorhergehenden Ansprüche sowie mit einem Zentralmodul (8) zur zentralen Ausführung fahrzeugweiter Bremsensteuerungsfunktionen, wobei das Zentralmodul (8) mit den Radmoduln (1, 2, 3, 4, 5, 6) über einen oder mehrere Datenbussysteme (7) zum Austausch von Informationen verbunden ist.

12. Bremssystem nach Anspruch 11, **dadurch gekennzeichnet, daß** das Zentralmodul (8) eine Information über die Radzuordnung eines Radmoduls (1, 2, 3, 4, 5, 6) an dieses überträgt.

## Claims

1. Wheel module (1) for a vehicle having an electrically controllable brake system (EBS) for controlling the braking force at at least one wheel (31) of the vehicle,
a) which is supplied with a braking value indicating the wanted desired braking force for the wheel (31),
b) which is supplied with a wheel-specific signal of the wheel (31) and at least one further wheel-specific signal of a further wheel,
c) which outputs an actuating signal, calculated using the braking value and the wheel-specific signals, to an actuator (29, 30) which is provided for setting the braking force at the wheel (31),
**characterized by** a main control channel associated with the wheel (31) and at least one additional control channel, in each of which channels wheel-specific calculation steps are carried out, the actuating signal being calculated in the main control channel using calculation results of the additional control channel.

2. Wheel module according to claim 1, **characterized in that** the wheel-specific signal of the wheel (31) is supplied to the wheel module at a higher repetition rate than the further wheel-specific signal of the further wheel.

3. Wheel module according to either one of the preceding claims, **characterized in that** as wheel-specific signal there is used a signal that indicates the rotational speed of the wheel.

4. Wheel module according to any one of the preceding claims,
**characterized by** the following features:
a) the wheel-specific calculation steps comprise calculation steps for the anti-lock control of a wheel, in which calculation steps intermediate results are formed,
b) the actuating signal is calculated using the intermediate results.

5. Wheel module according to claim 4, **characterized in that** as intermediate results slip signals, acceleration signals and/or braking force reduction, holding and/or re-build-up signals are determined.

6. Wheel module according to any one of the preceding claims, **characterized in that** establishment of the wheel allocation is carried out by inputting a wheel position parameter into an electronic control device (23, 28, 35) provided in the wheel module (1).

7. Wheel module according to any one of the preceding claims, **characterized by** a rotational speed sensor (32) connected to the wheel module (1) for determining the rotational speed of the wheel (31).

8. Wheel module according to claim 7, **characterized in that** when the wheel module (1) is allocated to a steerable and/or driven axle of a vehicle, the signal received from the rotational speed sensor (32) or a signal derived therefrom is transmitted by way of a data channel (7), especially a data bus system.

9. Wheel module according to either one of claims 7 and 8, **characterized in that** when the wheel module (1) is allocated to a third or further vehicle axle, the signal received by the rotational speed sensor (32) or the signal derived therefrom is not transmitted by way of the data channel (7).

10. Wheel module according to any one of the preceding claims, **characterized in that** a signal from a further sensor (33), especially a pressure sensor, representing the actual braking force at the wheel (31) is evaluated.

11. Brake system having a plurality of wheel modules (1, 2, 3, 4, 5, 6) in accordance with any one of the preceding claims as well as having a central module (8) for central implementation of vehicle-wide braking control functions, the central module (8) being connected to the wheel modules (1, 2, 3, 4, 5, 6) by way of one or more data bus systems (7) for exchange of information.

12. Brake system according to claim 11, **characterized in that** the central module (8) transfers information relating to the wheel allocation of a wheel module (1, 2, 3, 4, 5, 6) to the latter.

## Revendications

1. Module de roue (1) pour un véhicule comportant un système de freinage à commande électrique (EBS) pour commander la force de freinage sur au moins une roue (31) du véhicule,
a) auquel est acheminée une valeur de freinage indiquant la force de freinage de consigne désirée pour la roue (31),
b) auquel est acheminé un signal spécifique à la roue (31), et au moins un autre signal spécifique à une autre roue,
c) qui émet à un actionneur (29, 30) un signal de positionnement calculé en utilisant la valeur de freinage et les signaux spécifiques aux roues, actionneur qui est prévu pour régler la force de freinage au niveau de la roue (31),
**caractérisé par** un canal de régulation principal associé à la roue (31) et par au moins un canal de régulation supplémentaire dans lequel sont exécutées des étapes de calcul respectives spécifiques aux roues, le signal de positionnement étant calculé dans le canal de régulation principal en utilisant des résultats de calcul du canal de régulation supplémentaire.

2. Module de roue selon la revendication 1, **caractérisé en ce que** le signal spécifique à la roue (31) est acheminé au module de roue avec une cadence de répétition supérieure à celle de l'autre signal spécifique à l'autre roue.

3. Module de roue selon l'une des revendications précédentes, **caractérisé en ce qu'**à titre de signal spécifique à la roue est utilisé un signal indiquant la vitesse de rotation de la roue.

4. Module de roue selon l'une des revendications précédentes, **caractérisé par** les éléments suivants :
a) les étapes de calcul spécifiques aux roues présentent des étapes de calcul pour la régulation antiblocage d'une roue, dans lesquelles sont formés des résultats intermédiaires,
b) le signal de positionnement est calculé en utilisant les résultats intermédiaires.

5. Module de roue selon la revendication 4, **caractérisé en ce qu'**à titre de résultats intermédiaires sont déterminés des signaux de patinage, des signaux d'accélération, et/ou des signaux de réduction, de maintien et/ou de rétablissement de la force de freinage.

6. Module de roue selon l'une des revendications précédentes, **caractérisé en ce qu'**une définition de l'association de roue est effectuée par entrée d'un paramètre de position de roue dans un dispositif de commande électronique (23, 28, 35) prévu dans le module de roue (1).

7. Module de roue selon l'une des revendications précédentes, **caractérisé par** un capteur de vitesse de rotation (32) connecté au module de roue (1) et destiné à déterminer la vitesse de rotation de la roue (31).

8. Module de roule selon la revendication 7, **caractérisé en ce que** lors de l'association du module de roue (1) à un essieu directeur et/ou moteur d'un véhicule, le signal reçu du capteur de vitesse de rotation (32) ou un signal dérivé de celui-ci est émis via un canal de données (7), en particulier via un système à bus de données.

9. Module de roue selon la revendication 7 ou 8, **caractérisé en ce que** lors de l'association du module de roue (1) à un troisième ou à un autre essieu de véhicule, le signal reçu du capteur de vitesse de rotation (32) ou le signal dérivé de celui-ci n'est pas émis via le canal de données (7).

10. Module de roue selon l'une des revendications précédentes, **caractérisé en ce qu'**un signal représentant la force de freinage réelle au niveau de la roue (31) provenant d'un autre capteur (33), en particulier un capteur de pression, est évalué.

11. Système de freinage comportant plusieurs modules de roue (1, 2, 3, 4, 5, 6) selon l'une des revendications précédentes, et comportant un module central (8) pour l'exécution centralisée de fonctions de commande des freins portant sur tout le véhicule, le module central (8) étant connecté aux modules de roue (1, 2, 3, 4, 5, 6) via un ou plusieurs systèmes à bus de données (7) pour échanger des informations.

12. Système de freinage selon la revendication 11, **caractérisé en ce que** le module central (8) transmet une information quant à l'association de roue d'un module de roue (1, 2, 3, 4, 5, 6) à ce dernier.
